# EUROPEAN PATENT APPLICATION

(11) **EP 3 451 563 A1**
(43) Date of publication of application: **06.03.2019**
(21) Application number: 18188329.9
(22) Date of filing: 09.08.2018
(51) Int. Cl.: H04L 1/00

(54) **METHOD, TRANSMITTING NODE AND RECEIVING NODE FOR FEEDBACK CONTROL OF SIDELINK COMMUNICATION**

(30) Priority: 11.08.2017 US 201762543989 P; 25.07.2018 TW 10725707
(71) Applicant: Industrial Technology Research Institute, 31040 Hsinchu (TW)
(72) Inventor: LIEN, Shao-Yu, 913 Pingtung County (TW); TSAI, Hua-Lung, 104 Taipei City (TW); SHEU, Chorng-Ren, 807 Kaohsiung City (TW)
(74) Representative: 2K Patentanwälte Blasberg Kewitz & Reichel

(57) **Abstract**

A method, a transmitting node and a receiving node for feedback control of sidelink communication are provided. In the method, the base station generates a target information for transmitting feedback information with respect to data transmissions between a transmitting node and a receiving node; and at least one of the transmitting node and the receiving node receives the target information transmitted by the base station, or receives, from another node, target information transmitted by the base station to the another node; and in response to the transmitting node transmitting the data to the receiving node, the receiving node transmits the feedback information according to the target information, and the transmitting node obtains the feedback information according to the target information.

## Description

### BACKGROUND OF THE DISCLOSURE

### Field of the Disclosure

The disclosure relates to a technique for performing feedback in sidelink communication.

### Description of Related Art

Vehicle to Everything (V2X) technique is a vehicle data transmission technique based on a 3^{rd} Generation Partnership Project (3GPP) communication protocol, which includes Vehicle to Vehicle (V2V) communication, Vehicle to Pedestrian (V2P) communication and Vehicle to Infrastructure (V2I) communication, etc., and such technique is mainly used for implementing vehicle data transmission through vehicle smart terminal equipment.

The current support for feedback transmission in sidelink feedback transmission has been identified as a hypothesis for implementation of sidelink identification information (SID) for further enhanced device-to-device communication. However, there is no clear specification in the existing technique, and when it is required to detect whether the required data is received or the quality of the received data is detected, it is required to determine how to perform the feedback transmission in the sidelink feedback transmission.

Therefore, how to provide a feedback transmission compatible with further enhanced device of the 3GPP communication protocol is one of the issues of interest to those skilled in the art.

### SUMMARY OF THE DISCLOSURE

The disclosure is directed to a method and a system for feedback control of sidelink communication, in which feedback between a transmitting node and a receiving node is implemented through resource allocation in sidelink or identified information of the transmitting node.

The disclosure provides a method for feedback control of sidelink communication, which is adapted to a sidelink communication system including a base station, a transmitting node and a receiving node. The method includes following steps: the base station generates a target information for transmitting feedback information with respect to data transmission between the transmitting node and the receiving node; at least one of the transmitting node and the receiving node receives the target information transmitted by the base station, or receives, from another node, the target information transmitted by the base station to the another node; and in response to the transmitting node transmitting data to the receiving node, the receiving node transmits the feedback information according to the target information, and the transmitting node obtains the feedback information according to the target information.

The disclosure provides a transmitting node of a sidelink communication system including a communication module, a storage device and a processor. The communication module uses sidelink communication to communicate with a base station and a receiving node of the sidelink communication system; the storage device stores a plurality of instructions; the processor is coupled to the communication module and the storage device, and is configured to load and execute the instructions stored in the storage device to: use the communication module to transmit data to the receiving node; and use the communication module to receive feedback information transmitted by the receiving node according to target information in response to reception of the data, where the target information is information used for transmitting the feedback information generated by a base station with respect to data transmission between the transmitting node and the receiving node.

The disclosure provides a receiving node of a sidelink communication system including a communication module, a storage device and a processor. The communication module uses sidelink communication to communicate with a base station and a transmitting node of the sidelink communication system; the storage device stores a plurality of instructions; the processor is coupled to the communication module and the storage device, and is configured to load and execute the instructions stored in the storage device to: use the communication module to receive data transmitted by the receiving node; and use the communication module to transmit feedback information according to target information in response to reception of the data, where the target information is information used for transmitting the feedback information generated by the base station with respect to data transmission between the transmitting node and the receiving node.

The disclosure provides a method for feedback control of sidelink communication, which is adapted to a sidelink communication system including a base station, a transmitting node and a receiving node. The method includes following steps: the transmitting node generates a target information for transmitting feedback information with respect to data transmission between the transmitting node and the receiving node; the transmitting node transmits data and the target information to the receiving node; the receiving node transmits the feedback information according to the target information in response to reception of the data; and the transmitting node obtains the feedback information according to the target information.

The disclosure provides a transmitting node of a sidelink communication system including a communication module, a storage device and a processor. The communication module uses sidelink communication to communicate with a receiving node of the sidelink communication system; the storage device stores a plurality of instructions; the processor is coupled to the communication module and the storage device, and is configured to load and execute the instructions stored in the storage device to: generate target information for transmitting feedback information with respect to data transmission between the transmitting node and the receiving node; use the communication module to transmit data and the target information to the receiving node; and use the communication module to receive feedback information transmitted by the receiving node according to the target information in response to reception of the data.

The disclosure provides a receiving node of a sidelink communication system including a communication module, a storage device and a processor. The communication module uses sidelink communication to communicate with a base station and a receiving node of a sidelink communication system; the storage device stores a plurality of instructions; the processor is coupled to the communication module and the storage device, and is configured to load and execute the instructions stored in the storage device to: use the communication module to receive data and target information transmitted by the transmitting node; where the target information is information for transmitting feedback information generated by the transmitting node with respect to data transmission between the transmitting node and the receiving node; and use the communication module to transmit the feedback information according to the target information in response to reception of the data.

According to the above description, the method for feedback control of sidelink communication provided by the disclosure specifies how the transmitting node obtains the feedback information from the receiving node. In this way, the transmitting node and the receiving node may complete the sidelink feedback. Moreover, the disclosure may select to transmit the feedback information in a physical sidelink control channel. In this way, an effect of saving a resource of a physical sidelink shared channel is achieved, and by adopting the physical sidelink control channel, efficiency of obtaining the feedback information is enhanced.

In order to make the aforementioned and other features and advantages of the disclosure more comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a sidelink communication system according to an embodiment of the disclosure.
FIG. 2A and FIG. 2B are block diagrams of a receiving node and a transmitting node according to an embodiment of the disclosure.
FIG. 3 is a flowchart illustrating a method for feedback control of sidelink communication according to an embodiment of the disclosure.
FIG. 4A is a flowchart illustrating a method for feedback control of sidelink communication according to another embodiment of the disclosure.
FIG. 4B is a transmission schematic diagram of a feedback control system of sidelink communication according to another embodiment of the disclosure.
FIG. 5A is a flowchart illustrating a method for feedback control of sidelink communication according to another embodiment of the disclosure.
FIG. 5B is a transmission schematic diagram of a feedback control system of sidelink communication according to another embodiment of the disclosure.
FIG. 6A is a flowchart illustrating a method for feedback control of sidelink communication according to another embodiment of the disclosure.
FIG. 6B is a transmission schematic diagram of a feedback control system of sidelink communication according to another embodiment of the disclosure.
FIG. 7A is a flowchart illustrating a method for feedback control of sidelink communication according to another embodiment of the disclosure.
FIG. 7B is a transmission schematic diagram of a feedback control system of sidelink communication according to another embodiment of the disclosure.
FIG. 8A is a flowchart illustrating a method for feedback control of sidelink communication according to another embodiment of the disclosure.
FIG. 8B is a transmission schematic diagram of a feedback control system of sidelink communication according to another embodiment of the disclosure.
FIG. 9A is a flowchart illustrating a method for feedback control of sidelink communication according to another embodiment of the disclosure.
FIG. 9B is a transmission schematic diagram of a feedback control system of sidelink communication according to another embodiment of the disclosure.
FIG. 10 is a flowchart illustrating a method for feedback control of sidelink communication according to another embodiment of the disclosure.
FIG. 11A is a flowchart illustrating a method for feedback control of sidelink communication according to another embodiment of the disclosure.
FIG. 11B is a transmission schematic diagram of a feedback control system of sidelink communication according to another embodiment of the disclosure.
FIG. 12A is a flowchart illustrating a method for feedback control of sidelink communication according to another embodiment of the disclosure.
FIG. 12B is a transmission schematic diagram of a feedback control system of sidelink communication according to another embodiment of the disclosure.

### DESCRIPTION OF EMBODIMENTS

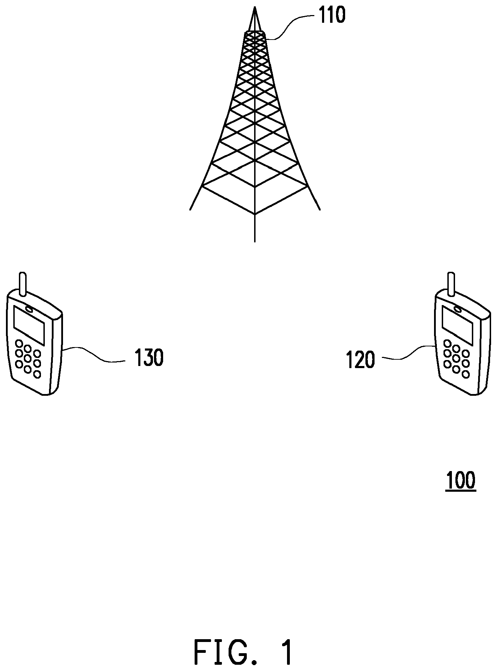

FIG. 1 is a schematic diagram of a sidelink communication system according to an embodiment of the disclosure. Referring to FIG. 1, the sidelink communication system 100 includes a base station 110, a receiving node 120 and a transmitting node 130. The base station 110 may be an Evolved Node B (eNB), etc. Generally, the sidelink communication system 100 may have a plurality of situations, and a first situation is an in-coverage situation where the receiving node 120 and the transmitting node 130 are all located within a network coverage range of the base station 110, a second situation is a partial-coverage situation where one of the receiving node 120 and the transmitting node 130 is located within the network coverage range of the base station 110, and a third situation is an out-of-coverage situation where the receiving node 120 and the transmitting node 130 are all located out of the network coverage range of the base station 110.

On the other hand, sidelink communication between the receiving node 120 and the transmitting node 130 may be implemented through the base station 110 or without the base station 110. Further, sidelink transmission between the receiving node 120 and the transmitting node 130 may adopt a transmission mode 1/3 with a support of the base station 110 or a transmission mode 2/4 without the support of the base station 110. In other words, the base station 110 may select available resource blocks (RBs) from a Physical Sidelink Shared Channel (PSSCH) in a resource pool for the sidelink transmission between the receiving node 120 and the transmitting node 130, or the transmitting node 130 directly selects the available RBs from the PSSCH in the resource pool to implement the sidelink transmission between the receiving node 120 and the transmitting node 130.

In the embodiment of the disclosure, the transmission mode 1 or the transmission mode 2 is also adopted between the receiving node 120 and the transmitting node 130 to implement sidelink feedback. In other words, the base station 110 may select available RBs from a Physical Sidelink Control Channel (PSCCH) in the resource pool for the sidelink feedback between the receiving node 120 and the transmitting node 130, or the transmitting node 130 directly selects the available RBs from the PSSCH in the resource pool to implement the sidelink feedback between the receiving node 120 and the transmitting node 130.

In an embodiment, the base station 110 may first generate a target information for transmitting feedback information with respect to data transmission between the transmitting node 130 and the receiving node 120. At least one of the transmitting node 130 and the receiving node 120 may receive the target information transmitted by the base station 110, or receives, from another node, the target information transmitted by the base station to the another node. In response to the transmitting node 130 transmitting data to the receiving node 120, the receiving node 120 transmits the feedback information according to the target information, and the transmitting node 130 may obtain the feedback information according to the target information. In another embodiment, the transmitting node 130 may first generate the target information for transmitting the feedback information with respect to the data transmission between the transmitting node 130 and the receiving node 120. The transmitting node 130 may transmit data and the target information to the receiving node 120. The receiving node 120 transmits the feedback information according to the target information in response to reception of the data. The transmitting node 130 may obtain the feedback information according to the target information.

The feedback information may be acknowledgement/non-acknowledgement information, Modulation and Coding Scheme (MCS) information, repetition information, Sidelink Received Signal Strength Indicator (SL-RSSI) information, Sidelink Reference Signal Receiving Power (SL-RSRP) information, sidelink Reference Signal Receiving Quality (RSRQ) information, sidelink TX/RX ID and feedback resource pool configuration information, etc., which is not limited by the disclosure.

Through the aforementioned sidelink communication system 100, the disclosure is adapted to implement sidelink feedback according to the generated target information, and the transmitting node 130 may obtain the feedback information according to the target information, so that the transmitting node learns a receiving condition of the data received by the receiving node 120 and transmitted by the transmitting node 130.

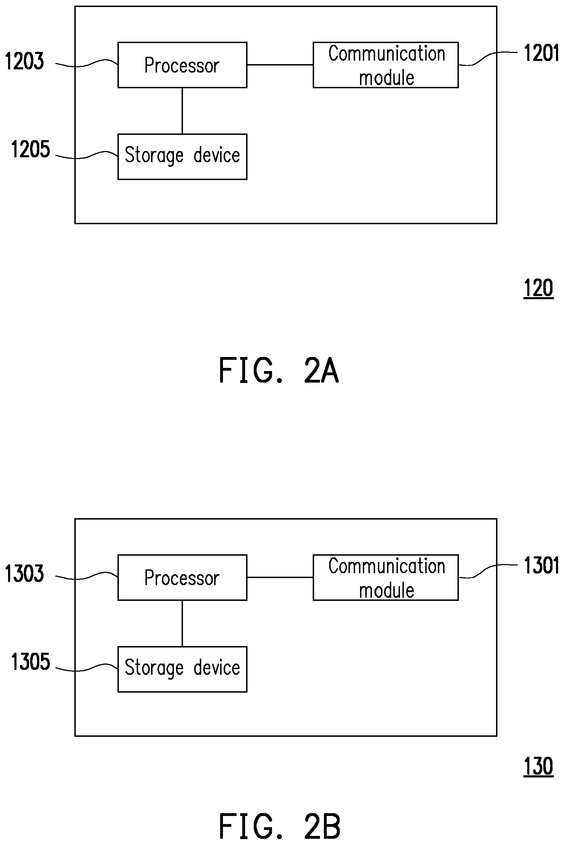

FIG. 2A and FIG. 2B are block diagrams of a receiving node and a transmitting node according to an embodiment of the disclosure. Referring to FIG. 2A, the receiving node 120 includes a communication module 1201, a processor 1203 and a storage device 1205. The communication module 1201 may use sidelink communication to communicate with the base station 100 and the transmitting node of the sidelink communication system 100. The storage device 1205 may store a plurality of instructions. The processor 1203 may be coupled to the communication module 1201 and the storage device 1205, and is configured to load and execute the instructions stored in the storage device 1205. Referring to FIG. 2B, the transmitting node 130 includes a communication module 1301, a processor 1303 and a storage device 1305. The communication module 1301 may use sidelink communication to communicate with the base station 110 and the receiving node 120 of the sidelink communication system 100. The storage device 1305 may store a plurality of instructions. The processor 1303 may be coupled to the communication module 1301 and the storage device 1305, and is configured to load and execute the instructions stored in the storage device 1305.

Moreover, the receiving node 120 and the transmitting node 130 may be driving computers supporting a vehicle networking technique, or computation devices such as servers, personal computers (PCs), table PCs, mobile phones, personal digital assistants (PDAs), and other computing devices. The communication modules 1201, 1301 may be communication devices supporting a long term evolution (LTE) (i.e. 4G) technique with a frequency band of 2GHz band and/or a Dedicated Short-Range Communication (DSRC) technique with a frequency band of 5.9 GHz. The storage devices 1205, 1305 may be any type of fixed or movable random access memories (RAMs), read-only memories (ROMs), flash memories, or similar devices or a combination of the above devices. The processors 1203, 1303 may be Central Processing Units (CPUs), or other programmable general purpose or special purpose microprocessors, Digital Signal Processors (DSPs), programmable controllers, Application Specific Integrated Circuits (ASIC), Programmable Logic Devices (PLDs) or similar devices or a combination of the above devices.

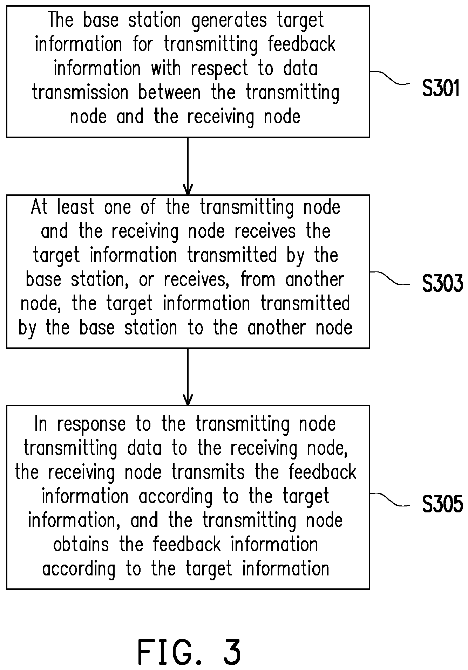

FIG. 3 is a flowchart illustrating a method for feedback control of sidelink communication according to an embodiment of the disclosure. The embodiment is adapted to the aforementioned in-coverage situation and partial-coverage situation. Referring to FIG. 3, in step S301, the base station 110 generates target information for transmitting feedback information with respect to data transmission between the transmitting node 130 and the receiving node 120. In step S303, at least one of the transmitting node 130 and the receiving node 120 receives the target information transmitted by the base station 110, or receives, from another node, the target information transmitted by the base station 110 to the another node. In step S305, in response to the transmitting node 130 transmitting data to the receiving node 120, the receiving node 120 transmits the feedback information according to the target information, and the transmitting node 130 obtains the feedback information according to the target information. A plurality of situations that the transmitting node 130 and the receiving node 120 receive the target information and accordingly transmit the feedback information is described in detail below.

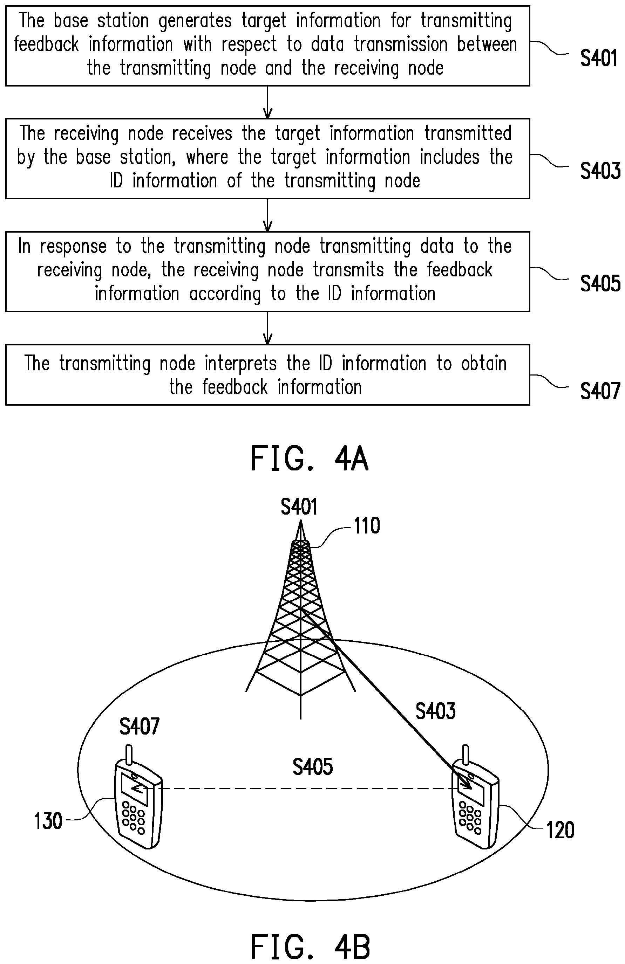

FIG. 4A is a flowchart illustrating a method for feedback control of sidelink communication according to another embodiment of the disclosure. Referring to FIG. 4B, FIG. 4B is a transmission schematic diagram of a feedback control system of sidelink communication according to another embodiment of the disclosure.

In step S401, the base station 110 generates target information for transmitting feedback information with respect to data transmission between the transmitting node 130 and the receiving node 120. To be specific, when the transmitting node 130 and the receiving node 120 are all located within the network coverage range of the base station 110, the base station 110 may pre-store sidelink ID information of the transmitting node 130. In order to implement sidelink feedback between the transmitting node 130 and the receiving node 120, the base station 110 generates the target information, and adds the ID information of the transmitting node 130 to the target information.

In step S403, the receiving node 120 receives the target information transmitted by the base station 110, where the target information includes the ID information of the transmitting node 130. To be specific, the base station 110 may use the PSCCH to transmit the target information including the ID information of the transmitting node 130 to the receiving node 120. The base station 110 may directly select RBs from the PSCCH, and use the selected RBs to transmit the target information to the receiving node 120.

In step S405, in response to the transmitting node 130 transmitting data to the receiving node 120, the receiving node 120 transmits the feedback information according to the ID information. To be specific, the transmitting node 130 may use the PSCCH to transmit data to the receiving node 120, and the receiving node 120 generates the feedback information according to the received data and the ID information, and uses the PSCCH to transmit the feedback information. The transmitting node 130 may use the RBs selected by the base station 110 from the PSSCH to transmit data to the receiving node 120. Alternatively, the transmitting node 130 directly selects the RBs from the PSSCH, and uses the selected RBs to transmit data to the receiving node 120. The receiving node 120 may also use the RBs selected by the base station 110 from the PSSCH to transmit data to the transmitting node 130. Alternatively, the receiving node 120 directly selects the RBs from the PSSCH, and uses the selected RBs to transmit data to the transmitting node 130.

In step S407, the transmitting node 130 interprets the ID information to obtain the feedback information. To be specific, the transmitting node 130 reads the RBs in the PSCCH to determine whether the RBs having the ID information of the transmitting node 130 exist. Until it is determined that the RBs having the ID information of the transmitting node 130 exist, the transmitting node 130 obtain the feedback information from the RBs.

Based on the aforementioned method, the transmitting node 130 and the receiving node 120 located within the network coverage range of the base station 110 may use the base station 110 to notify the ID information of the transmitting node 130 to the receiving node 120, and the receiving node 120 may directly set the ID information of the transmitting node 130 as target ID information, and transmits the feedback information through the PSCCH. The transmitting node 130 may directly find the RBs having its own ID information from the PSCCH, so as to obtain the required feedback information from the RBs.

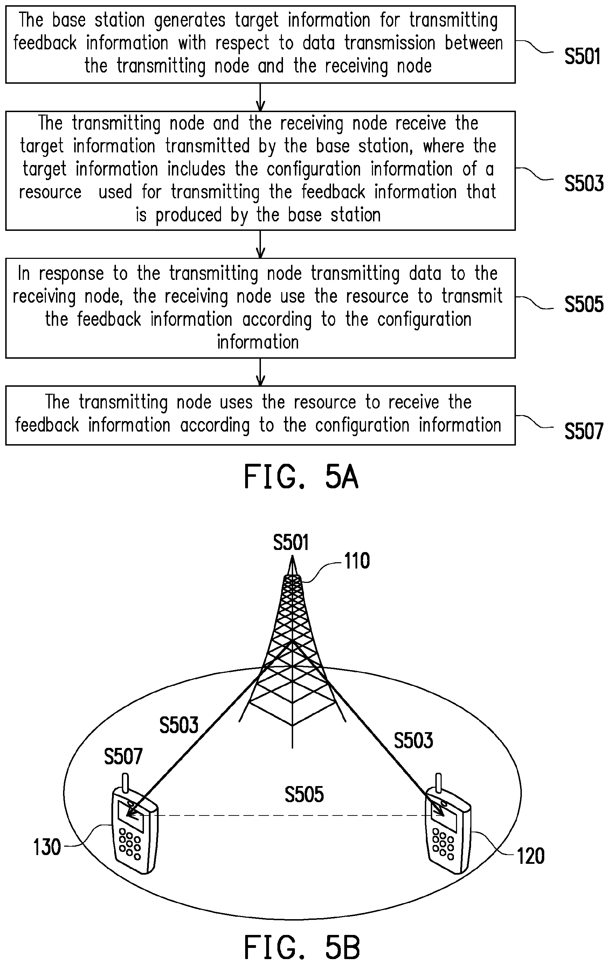

FIG. 5A is a flowchart illustrating a method for feedback control of sidelink communication according to another embodiment of the disclosure. Referring to FIG. 5B, FIG. 5B is a transmission schematic diagram of a feedback control system of sidelink communication according to another embodiment of the disclosure.

In step S501, the base station 110 generates target information for transmitting feedback information with respect to data transmission between the transmitting node 130 and the receiving node 120. To be specific, when the transmitting node 130 and the receiving node 120 are all located within the network coverage range of the base station 110, the base station 110 generates the target information, and selects the RBs used for transmitting the feedback information from the PSCCH. The base station 110 generates configuration information according to the selected RBs, and adds the configuration information to the target information.

In step S503, the transmitting node 130 and the receiving node 120 receive the target information transmitted by the base station 110, where the target information includes the configuration information of the resource used for transmitting the feedback information that is produced by the base station 110. To be specific, the base station 110 may use the PSCCH to transmit the target information including the configuration information to the transmitting node 130 and the receiving node 120. Alternatively, the base station 110 may directly select the RBs from the PSSCH, and uses the selected RBs to transmit the target information to the transmitting node 130 and the receiving node 120.

In step S505, in response to the transmitting node 130 transmitting data to the receiving node 120, the receiving node 120 uses the resource to transmit the feedback information according to the configuration information. To be specific, the transmitting node 130 may use the PSSCH to transmit data to the receiving node 120, and the receiving node 120 generates the feedback information according to the received data, and uses the RBs in the PSCCH indicated by the configuration information to transmit the feedback information. The transmitting node 130 may use the RBs selected by the base station 110 from the PSSCH to transmit data to the receiving node 120. Alternatively, the transmitting node 130 directly selects the RBs from the PSSCH, and uses the selected RBs to transmit data to the receiving node 120. In step S507, the transmitting node 130 uses the resource to receive the feedback information according to the configuration information. To be specific, the transmitting node 130 may receive the feedback information from the RBs in the PSCCH indicated by the configuration information.

Based on the aforementioned method, the transmitting node 130 and the receiving node 120 located within the network coverage range of the base station 110 may use the base station 110 to directly allocate the resource required for the sidelink feedback, and the transmitting node 130 and the receiving node 120 may directly use the allocated resource to complete the sidelink feedback.

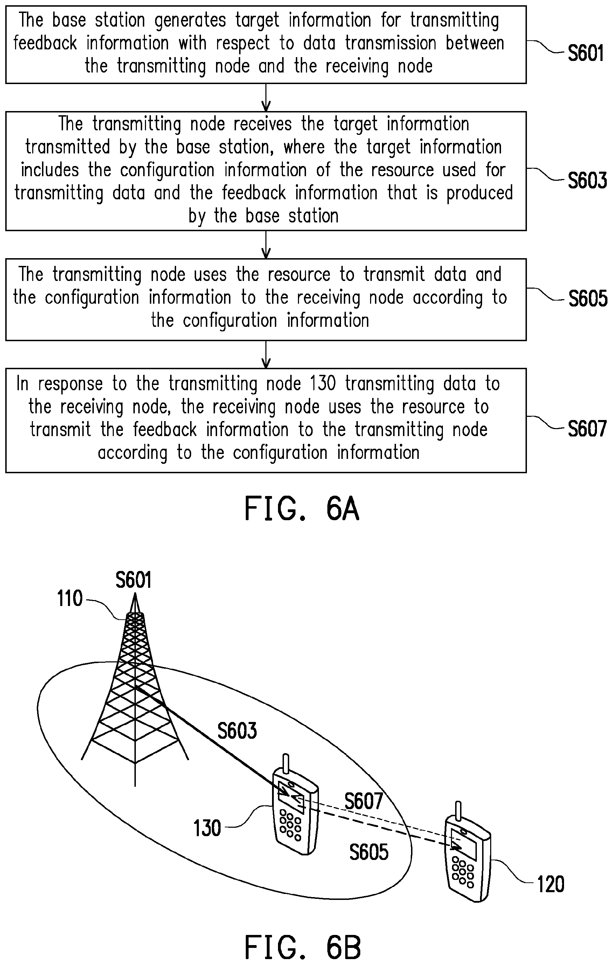

FIG. 6A is a flowchart illustrating a method for feedback control of sidelink communication according to another embodiment of the disclosure. Referring to FIG. 6B, FIG. 6B is a transmission schematic diagram of a feedback control system of sidelink communication according to another embodiment of the disclosure.

In step S601, the base station 110 generates target information for transmitting feedback information with respect to data transmission between the transmitting node 130 and the receiving node 120. To be specific, when only the transmitting node 130 is located within the network coverage range of the base station 110, the base station 110 generates the target information, and selects the RBs used for transmitting the feedback information from the PSCCH, and selects the RBs used for transmitting data from the PSSCH. The base station 110 generates configuration information according to the RBs used for transmitting the feedback information and the RBs used for transmitting data, and adds the configuration information to the target information.

In step S603, the transmitting node 130 receives the target information transmitted by the base station 110, where the target information includes the configuration information of the resource used for transmitting data and the feedback information that is produced by the base station 110. To be specific, the base station 110 may use the PSCCH to transmit the target information including the configuration information to the transmitting node 130. The base station 110 may directly select the RBs from the PSCCH, and uses the selected RBs to transmit the target information to the transmitting node 130.

In step S605, the transmitting node 130 uses the resource to transmit data and the configuration information to the receiving node 120 according to the configuration information. To be specific, the transmitting node 130 may use the RBs in the PSSCH indicated by the configuration information to transmit data and the configuration information to the receiving node 120.

In step S607, in response to the transmitting node 130 transmitting data to the receiving node 120, the receiving node 120 uses the resource to transmit the feedback information to the transmitting node 130 according to the configuration information. To be specific, the receiving node 120 generates the feedback information according to the received data, and uses the RBs in the PSCCH indicated by the configuration information to transmit the feedback information, and the transmitting node 130 receives the feedback information from the RBs in the PSCCH indicated by the configuration information.

Based on the aforementioned method, the base station 110 directly allocates the resource required by the sidelink transmission and the sidelink feedback. The base station 110 may notify the resource required by the sidelink transmission and the sidelink feedback to the transmitting node 130 located within the network coverage range of the base station 110, and the transmitting node 130 notifies the resource required by the sidelink feedback to the receiving node 120 located outside the network coverage range of the base station 110. In this way, the transmitting node 130 and the receiving node 120 may complete the sidelink transmission and the sidelink feedback according to the resource required by the sidelink transmission and the sidelink feedback respectively.

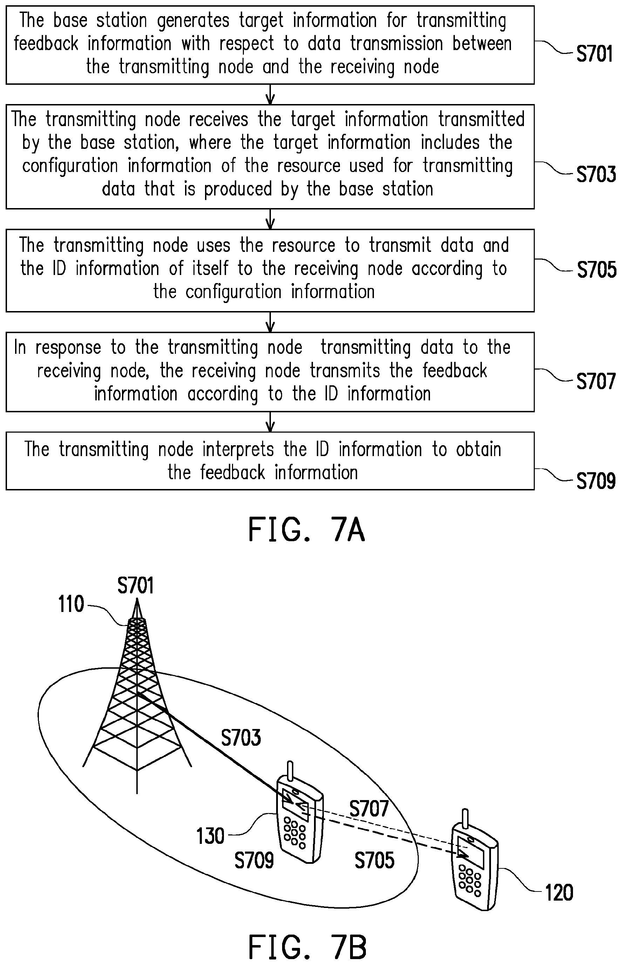

FIG. 7A is a flowchart illustrating a method for feedback control of sidelink communication according to another embodiment of the disclosure. Referring to FIG. 7B, FIG. 7B is a transmission schematic diagram of a feedback control system of sidelink communication according to another embodiment of the disclosure.

In step S701, the base station 110 generates target information for transmitting feedback information with respect to data transmission between the transmitting node 130 and the receiving node 120. To be specific, when only the transmitting node 130 is located within the network coverage range of the base station 110, the base station 110 generates the target information, and selects the RBs used for transmitting data from the PSSCH. The base station 110 generates configuration information according to the RBs used for transmitting data, and adds the configuration information to the target information.

In step S703, the transmitting node 130 receives the target information transmitted by the base station 110, where the target information includes the configuration information of the resource used for transmitting data that is produced by the base station 110. To be specific, the base station 110 may use the PSCCH to transmit the target information including the configuration information to the transmitting node 130. The base station 110 may directly select the RBs from the PSCCH, and uses the selected RBs to transmit the target information to the transmitting node 130.

In step S705, the transmitting node 130 uses the resource to transmit data and the ID information of itself to the receiving node 120 according to the configuration information. To be specific, the transmitting node 130 may use the RBs in the PSSCH indicated by the configuration information to transmit data and the sidelink ID information of itself to the receiving node 120.

In step S707, in response to the transmitting node 130 transmitting data to the receiving node 120, the receiving node 120 transmits the feedback information according to the sidelink ID information. To be specific, the receiving node 120 generates the feedback information according to the received data, and adds the sidelink ID information to the feedback information, and selects the RBs in the PSCCH to transmit the feedback information (i.e. to adopt the transmission mode 2). In step S709, the transmitting node 130 interprets the ID information to obtain the feedback information. To be specific, the transmitting node 130 reads the RBs in the PSCCH to determine whether the RBs having the ID information of the transmitting node 130 exist. Until it is determined that the RBs having the ID information of the transmitting node 130 exist, the transmitting node 130 obtain the feedback information from the RBs.

Based on the aforementioned method, the base station 110 directly allocates the resource required by the sidelink transmission. The base station 110 may notify the resource required by the sidelink transmission to the transmitting node 130 located within the network coverage range of the base station 110, and the transmitting node 130 notifies the ID information of itself to the receiving node 120 located outside the network coverage range of the base station 110 by using the resource required for the sidelink transmission. In this way, the receiving node 120 may directly set the ID information of the transmitting nod 130 as target ID information, and transmits the feedback information to the PSCCH. The transmitting node 130 may directly find the RBs with the ID information of itself from the PSCCH, so as to obtain the required feedback information from the RBs.

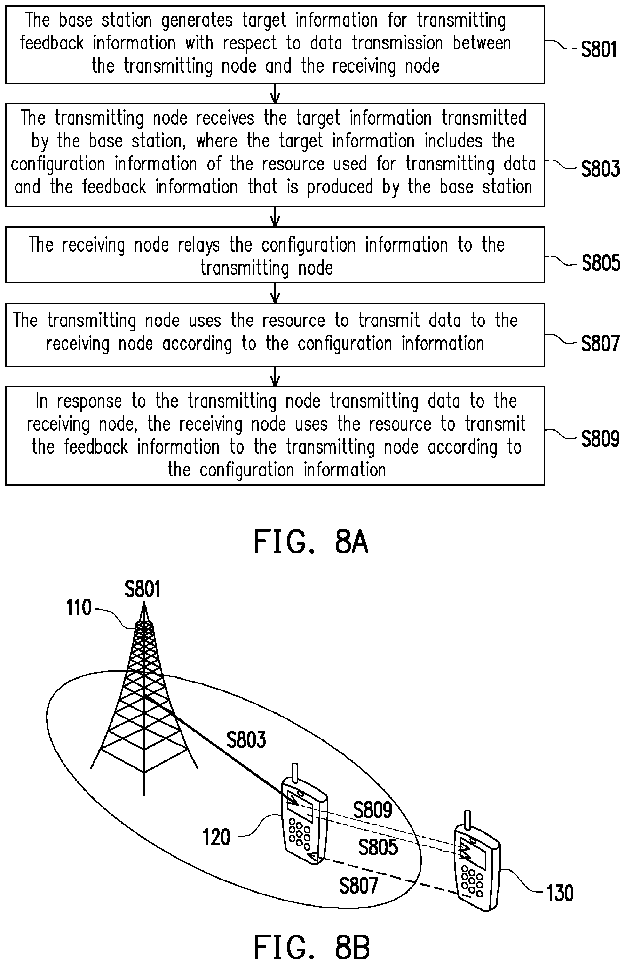

FIG. 8A is a flowchart illustrating a method for feedback control of sidelink communication according to another embodiment of the disclosure. Referring to FIG. 8B, FIG. 8B is a transmission schematic diagram of a feedback control system of sidelink communication according to another embodiment of the disclosure.

In step S801, the base station 110 generates target information for transmitting feedback information with respect to data transmission between the transmitting node 130 and the receiving node 120. To be specific, when only the receiving node 120 is located within the network coverage range of the base station 110, the base station 110 generates the target information, and selects the RBs used for transmitting the feedback information from the PSCCH, and selects the RBs used for transmitting data from the PSSCH. The base station 110 generates configuration information according to the RBs used for transmitting the feedback information and the RBs used for transmitting data, and adds the configuration information to the target information.

In step S803, the receiving node 120 receives the target information transmitted by the base station 110, where the target information includes the configuration information of the resource used for transmitting data and the feedback information that is produced by the base station 110. To be specific, the base station 110 may use the PSCCH to transmit the target information including the configuration information to the receiving node 120. The base station 110 may directly select the RBs from the PSCCH, and uses the selected RBs to transmit the target information to the receiving node 120.

In step S805, the receiving node 120 relays the configuration information to the transmitting node 130. To be specific, the receiving node 120 may use the RBs in the PSCCH indicated by the configuration information to relay the configuration information to the transmitting node 130.

In step S807, the transmitting node 130 uses the resource to transmit data to the receiving node 120 according to the configuration information. To be specific, the transmitting node 130 may use the RBs in the PSSCH indicated by the configuration information to transmit data to the receiving node 120. In step S809, in response to the transmitting node 130 transmitting data to the receiving node 120, the receiving node 120 uses the resource to transmit the feedback information to the transmitting node 130 according to the configuration information. To be specific, the receiving node 120 generates the feedback information according to the received data, and transmits the feedback information by using the RBs in the PSCCH indicated by the configuration information, and the transmitting node 130 receives the feedback information from the RBs in the PSCCH indicated by the configuration information.

Based on the aforementioned method, the base station 110 may directly allocate the resource required by the sidelink transmission and the sidelink feedback. The base station 110 may notify the resource required by the sidelink transmission and the sidelink feedback to the receiving node 120 located within the network coverage range of the base station 110, and the receiving node 120 notifies the resource required by the sidelink transmission to the transmitting node 130 located outside the network coverage range of the base station 110. In this way, the transmitting node 130 and the receiving node 120 may respectively complete the sidelink transmission and the sidelink feedback according to the resource required by the sidelink transmission and the sidelink feedback.

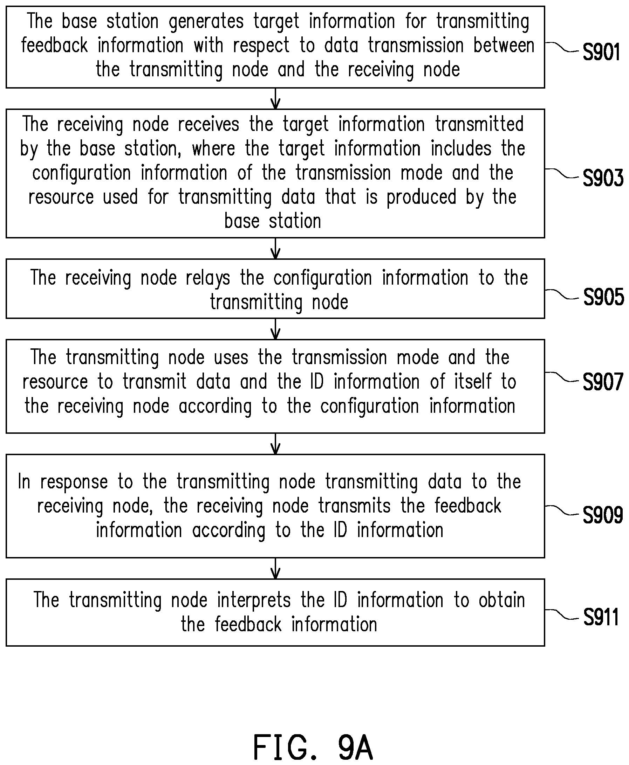

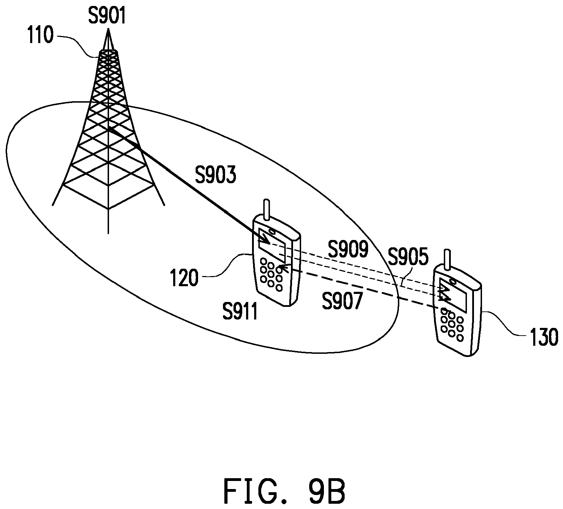

FIG. 9A is a flowchart illustrating a method for feedback control of sidelink communication according to another embodiment of the disclosure. Referring to FIG. 9B, FIG. 9B is a transmission schematic diagram of a feedback control system of sidelink communication according to another embodiment of the disclosure.

In step S901, the base station 110 generates the target information for transmitting feedback information with respect to data transmission between the transmitting node 130 and the receiving node 120. To be specific, when only the receiving node 120 is located within the network coverage range of the base station 110, the base station 110 generates the target information, and selects the RBs used for transmitting data from the PSSCH. The base station 110 generates configuration information according to the RBs used for transmitting data, and adds the configuration information and a transmission mode to the target information.

In step S903, the receiving node 120 receives the target information transmitted by the base station 110, where the target information includes the configuration information of the transmission mode and the resource used for transmitting data that is produced by the base station 110. To be specific, the base station 110 may use the PSCCH to transmit the target information including the configuration information and the transmission mode to the transmitting node 130. The base station 110 may directly select the RBs from the PSCCH, and uses the selected RBs to transmit the target information to the receiving node 120.

In step S905, the receiving node 120 relays the configuration information to the transmitting node 130. To be specific, the receiving node 120 may use the PSCCH to relay the configuration information to the transmitting node 130. The receiving node 120 may use the RBs selected by the base station 110 from the PSSCH to transmit data to the transmitting node 130. Alternatively, the receiving node 120 directly selects the RBs from the PSSCH, and uses the selected RBs to transmit data to the transmitting node 130.

In step S907, the transmitting node 130 uses the transmission mode and the resource to transmit data and the ID information of itself to the receiving node 120 according to the configuration information. To be specific, the transmitting node 130 may determine the transmission mode adopted by the sidelink feedback according to the transmission mode, and adopts the indicated transmission mode, so as to use the RBs in the PSSCH indicated by the configuration information to transmit data and the ID information of itself to the receiving node 120.

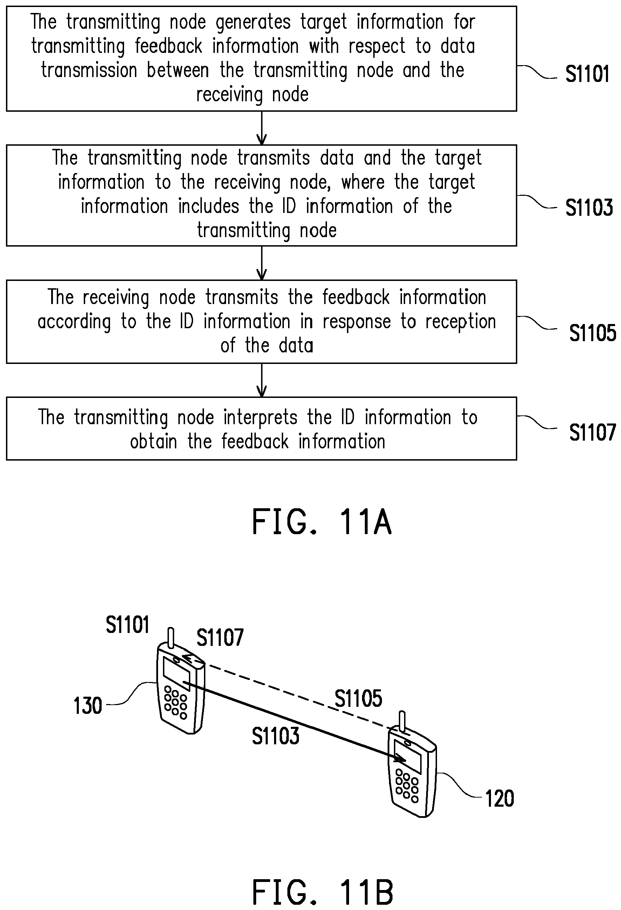

For example, when the transmission mode is the transmission mode 1, the transmitting node 130 may use the RBs in the PSSCH indicated by the configuration information to transmit data and the ID information of itself to the receiving node 120, and when the transmission mode is the transmission mode 2, a method shown in FIG. 11A and FIG. 11B is adopted, which is described later.

In step S909, in response to the transmitting node 130 transmitting data to the receiving node 120, the receiving node 120 transmits the feedback information according to the ID information. To be specific, the receiving node 120 generates the feedback information according to the received data and the ID information, and uses the PSCCH to transmit the feedback information. Similarly, the receiving node 120 may also use the RBs selected by the base station 110 from the PSSCH to transmit the feedback information. Alternatively, the receiving node 120 directly selects the RBs from the PSSCH, and uses the selected RBs to transmit the feedback information.

In step S911, the transmitting node 130 interprets the ID information to obtain the feedback information. To be specific, the transmitting node 130 reads the RBs in the PSCCH to determine whether the RBs having the ID information of the transmitting node 130 exist. Until it is determined that the RBs having the ID information of the transmitting node 130 exist, the transmitting node 130 obtain the feedback information from the RBs.

Based on the aforementioned method, the receiving node 120 located within the network coverage range of the base station 110 may pre-notify the transmission mode adopted by the sidelink transmission to the transmitting node 130, and the transmitting node 130 adopts the transmission mode to notify the ID information of itself to the receiving node 120, and the receiving node 120 may directly set the ID information of the transmitting node 130 as target ID information, and transmits the feedback information to the PSCCH. The transmitting node 130 may directly find the RBs with the ID information of itself from the PSCCH, so as to obtain the required feedback information from the RBs.

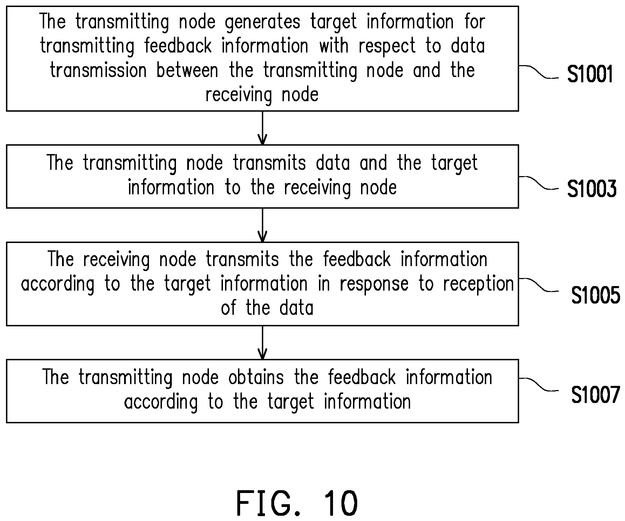

FIG. 10 is a flowchart illustrating a method for feedback control of sidelink communication according to another embodiment of the disclosure. Referring to FIG. 10, the embodiment is adapted to the aforementioned out-of-coverage situation. In step S1001, the transmitting node 130 generates target information for transmitting feedback information with respect to data transmission between the transmitting node 130 and the receiving node 120. In step S1003, the transmitting node 130 transmits data and the target information to the receiving node 120. In step S1005, the receiving node 120 transmits the feedback information according to the target information in response to reception of the data. In step S1007, the transmitting node 130 obtains the feedback information according to the target information. The situations that the transmitting node 130 generates and transmits the target information, and the receiving node 120 transmits the feedback information according to the target information are respectively described in detail below with reference of different embodiments.

FIG. 11A is a flowchart illustrating a method for feedback control of sidelink communication according to another embodiment of the disclosure. Referring to FIG. 11B, FIG. 11B is a transmission schematic diagram of a feedback control system of sidelink communication according to another embodiment of the disclosure.

In step S1101, the transmitting node 130 generates target information for transmitting feedback information with respect to data transmission between the transmitting node 130 and the receiving node 120. To be specific, when the transmitting node 130 and the receiving node 120 are all located out of the network coverage range of the base station 110, the transmitting node 130 generates the target information, which includes the RBs selected from the PSSCH for transmitting data, and generates the configuration information according to the RBs used for transmitting data and adds the configuration information and the ID information of the transmitting node 130 to the target information.

In step S1103, the transmitting node 130 transmits data and the target information to the receiving node 120, where the target information includes the ID information of the transmitting node 130. To be specific, the transmitting node 130 may use the RBs in the PSSCH indicated by the configuration information to transmit the target information having the configuration information and data to the receiving node 120.

In step S1105, the receiving node 120 transmits the feedback information according to the target information in response to reception of the data. To be specific, after the receiving node 120 receives the data, the receiving node 120 may select the RBs used for transmitting the feedback information from the PSCCH, and generates the feedback information according to the received data and the ID information, and uses the selected RBs to transmit the feedback information to the transmitting node 130.

In step S1107, the transmitting node 130 interprets the ID information to obtain the feedback information. To be specific, the transmitting node 130 reads the RBs in the PSCCH to determine whether the RBs having the ID information of the transmitting node 130 exist. Until it is determined that the RBs having the ID information of the transmitting node 130 exist, the transmitting node 130 obtain the feedback information from the RBs.

Based on the aforementioned method, the transmitting node 130 located out of the network coverage range of the base station 110 may directly notify the ID information of itself to the receiving node 120, and the receiving node 120 may directly set the ID information of the transmitting node 130 as target information, and transmits the feedback information to the PSCCH. The transmitting node 130 may directly find the RBs with the ID information of itself from the PSCCH, so as to obtain the required feedback information from the RBs.

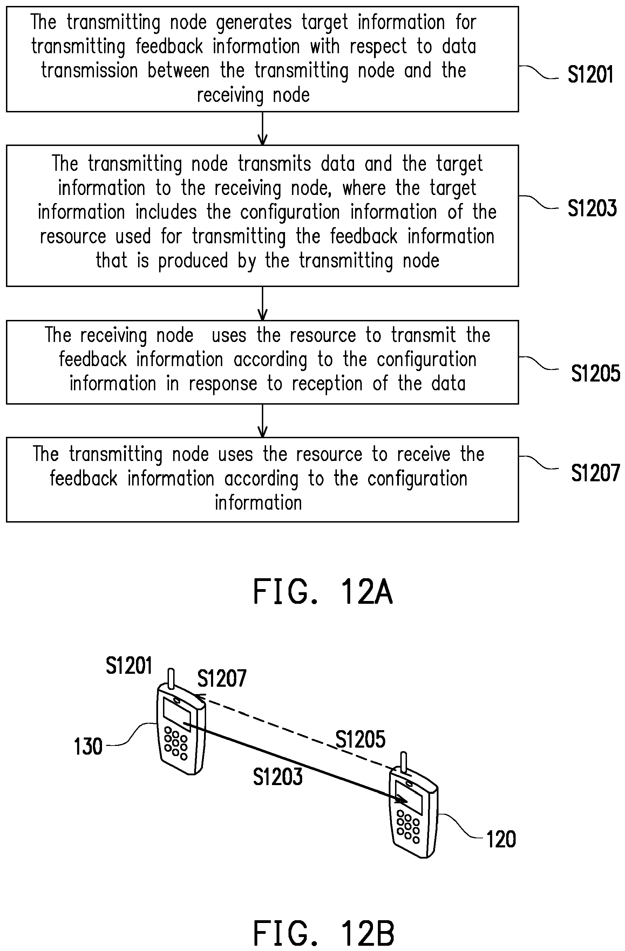

FIG. 12A is a flowchart illustrating a method for feedback control of sidelink communication according to another embodiment of the disclosure. Referring to FIG. 12B, FIG. 12B is a transmission schematic diagram of a feedback control system of sidelink communication according to another embodiment of the disclosure.

In step S1201, the transmitting node 130 generates target information for transmitting feedback information with respect to data transmission between the transmitting node 130 and the receiving node 120. To be specific, when the transmitting node 130 and the receiving node 120 are all located out of the network coverage range of the base station 110, the transmitting node 130 generates the target information, which includes the RBs selected from the PSSCH for transmitting data, and generates the configuration information according to the RBs used for transmitting the feedback information, and adds the configuration information to the target information.

In step S1203, the transmitting node 130 transmits data and the target information to the receiving node 120, where the target information includes the configuration information of the resource used for transmitting the feedback information that is produced by the transmitting node 130. To be specific, the transmitting node 130 selects the RBs used for transmitting data from the PSSCH, and transmits data and the target information to the receiving node 120 according to the selected RBs.

In step S1205, the receiving node 120 uses the resource to transmit the feedback information according to the configuration information in response to reception of the data. To be specific, the receiving node 120 may use the RBs in the PSCCH indicated by the configuration information to transmit the feedback information to the transmitting node 130.

In step S1207, the transmitting node 130 uses the resource to receive the feedback information according to the configuration information. To be specific, the transmitting node 130 receives the feedback information from the RBs in the PSCCH indicated by the configuration information.

Based on the aforementioned method, the transmitting node 130 located out of the network coverage range of the base station 110 may directly select the resource required by the sidelink transmission and the sidelink feedback, and the transmitting node 130 and the receiving node 120 may directly use the selected resource to complete the sidelink transmission and the sidelink feedback.

In summary, the method for feedback control of sidelink communication provided by the disclosure provides a method that the transmitting node obtains the feedback information from the receiving node. The disclosure may select to transmit the feedback information in the PSCCH. In this way, an effect of saving the resource of the PSSCH is achieved, and by adopting the PSCCH, efficiency of obtaining the feedback information is enhanced.

It will be apparent to those skilled in the art that various modifications and variations can be made to the structure of the disclosure without departing from the scope or spirit of the disclosure. In view of the foregoing, it is intended that the disclosure cover modifications and variations of this disclosure provided they fall within the scope of the following claims and their equivalents.

## Claims

1. A method for feedback control of sidelink communication, adapted to a sidelink communication system comprising a base station, a transmitting node and a receiving node, the method for feedback control of sidelink communication comprising:
generating target information for transmitting feedback information by the base station with respect to data transmission between the transmitting node and the receiving node;
receiving the target information transmitted by the base station by at least one of the transmitting node and the receiving node, or receiving, from another node, the target information transmitted by the base station to the another node; and
in response to the transmitting node transmitting data to the receiving node, transmitting the feedback information by the receiving node according to the target information, and obtaining the feedback information by the transmitting node according to the target information.

2. The method for feedback control of sidelink communication as claimed in claim 1, wherein the step of receiving the target information and transmitting the feedback information comprises:
receiving the target information transmitted by the base station by the receiving node, wherein the target information comprises identification information of the transmitting node;
transmitting the feedback information by the receiving node according to the identification information; and
interpreting the identification information by the transmitting node to obtain the feedback information.

3. The method for feedback control of sidelink communication as claimed in claim 1, wherein the step of receiving the target information and transmitting the feedback information comprises:
receiving the target information transmitted by the base station by the transmitting node and the receiving node, wherein the target information comprises configuration information of a resource used for transmitting the feedback information that is configured by the base station;
using the resource to transmit the feedback information by the receiving node according to the configuration information; and
using the resource to receive the feedback information by the transmitting node according to the configuration information.

4. The method for feedback control of sidelink communication as claimed in claim 1, wherein the step of receiving the target information and transmitting the feedback information comprises:
receiving the target information transmitted by the base station by the transmitting node, wherein the target information comprises configuration information of a resource used for transmitting the data and the feedback information that is configured by the base station;
using the resource to transmit the data and the feedback information to the receiving node by the transmitting node according to the configuration information; and
using the resource to transmit the feedback information to the transmitting node by the receiving node according to the configuration information.

5. The method for feedback control of sidelink communication as claimed in claim 1, wherein the step of receiving the target information and transmitting the feedback information comprises:
receiving the target information transmitted by the base station by the transmitting node, wherein the target information comprises configuration information of a resource used for transmitting the data that is configured by the base station;
using the resource to transmit the data and identification information of itself to the receiving node by the transmitting node according to the configuration information;
transmitting the feedback information by the receiving node according to the identification information; and
interpreting the identification information to obtain the feedback information by the transmitting node.

6. The method for feedback control of sidelink communication as claimed in claim 1, wherein the step of receiving the target information and transmitting the feedback information comprises:
receiving the target information transmitted by the base station by the receiving node, wherein the target information comprises configuration information of a transmission mode and a resource used for transmitting the data and the feedback information that is configured by the base station;
relaying the configuration information to the transmitting node by the receiving node;
using the transmission mode and the resource to transmit the data to the receiving node by the transmitting node according to the configuration information; and
using the resource to transmit the feedback information to the transmitting node by the receiving node according to the configuration information.

7. The method for feedback control of sidelink communication as claimed in claim 1, wherein the step of receiving the target information and transmitting the feedback information comprises:
receiving the target information transmitted by the base station by the receiving node, wherein the target information comprises configuration information of a transmission mode and a resource used for transmitting the data that is configured by the base station;
relaying the configuration information to the transmitting node by the receiving node;
using the transmission mode and the resource to transmit the data and identification information of itself to the receiving node by the transmitting node according to the configuration information;
transmitting the feedback information by the receiving node according to the identification information; and
interpreting the identification information to obtain the feedback information by the transmitting node.

8. The method for feedback control of sidelink communication as claimed in claim 1, wherein the receiving node transmits the feedback information according to the target information, and the step of receiving the feedback information by the transmitting node according to the target information comprises:
using a control channel of the sidelink communication by the receiving node to transmit an identification information of the transmitting node contained in the target information, and using the control channel of the sidelink communication to transmit the feedback information; and
interpreting the identification information in the control channel by the transmitting node, so as to obtain the feedback information corresponding to the identification information from the control channel.

9. The method for feedback control of sidelink communication as claimed in claim 1, wherein the receiving node transmits the feedback information according to the target information, and the step of receiving the feedback information by the transmitting node according to the target information comprises:
using a resource of a control channel of the sidelink communication by the receiving node to transmit link information of the feedback information according to a configuration information of the resource used for transmitting the feedback information recorded in the target information and configured by the base station, and using the control channel of the sidelink communication to transmit the feedback information; and
reading the link information transmitted through the resource of the control channel by the transmitting node according to the configuration information recorded in the target information, so as to obtain the feedback information corresponding to the link information from the control channel.

10. A transmitting node of a sidelink communication system, comprising:
a communication module, using sidelink communication to communicate with a base station and a receiving node of the sidelink communication system;
a storage device, storing a plurality of instructions; and
a processor, coupled to the communication module and the storage device, and configured to load and execute the instructions stored in the storage device to:
use the communication module to transmit data to the receiving node; and
use the communication module to receive feedback information transmitted by the receiving node according to target information in response to reception of the data, wherein the target information is information used for transmitting the feedback information generated by the base station with respect to data transmission between the transmitting node and the receiving node.

11. The transmitting node of the sidelink communication system as claimed in claim 10, wherein the target information comprises identification information of the transmitting node, and the processor comprises:
using the communication module to interpret the identification information transmitted by the receiving node by using a control channel of the sidelink communication, so as to obtain the feedback information corresponding to the identification information from the control channel of the sidelink communication.

12. The transmitting node of the sidelink communication system as claimed in claim 10, wherein the target information comprises configuration information of a resource used for transmitting the feedback information that is configured by the base station, and the processor comprises:
using the communication module to receive the configuration information from the base station; and
reading a link information transmitted through the resource of a control channel of the sidelink communication according to the configuration information, so as to obtain the feedback information corresponding to the link information from the control channel of the sidelink communication.

13. A receiving node of a sidelink communication system, comprising:
a communication module, using sidelink communication to communicate with a base station and a transmitting node of the sidelink communication system;
a storage device, storing a plurality of instructions; and
a processor, coupled to the communication module and the storage device, and configured to load and execute the instructions stored in the storage device to:
use the communication module to receive data transmitted by the transmitting node; and
use the communication module to transmit feedback information according to target information in response to reception of the data, wherein the target information is information used for transmitting the feedback information generated by the base station with respect to data transmission between the transmitting node and the receiving node.

14. The receiving node of the sidelink communication system as claimed in claim 13, wherein the target information comprises identification information of the transmitting node, and the processor comprises:
using the communication module to transmit the identification information by using a control channel of the sidelink communication, and transmit the feedback information by using the control channel of the sidelink communication.

15. The receiving node of the sidelink communication system as claimed in claim 13, wherein the target information comprises configuration information of a resource used for transmitting the feedback information that is configured by the base station, and the processor comprises:
using the communication module to receive the configuration information from the base station or the transmitting node; and
transmitting link information of the feedback information by using the resource of a control channel of the sidelink communication according to the configuration information, and using the control channel of the sidelink communication to transmit the feedback information.

16. A method for feedback control of sidelink communication, adapted to a sidelink communication system comprising a transmitting node and a receiving node, the method for feedback control of sidelink communication comprising:
generating a target information for transmitting feedback information by the transmitting node with respect to data transmission between the transmitting node and the receiving node;
transmitting data and the target information to the receiving node by the transmitting node;
transmitting the feedback information by the receiving node according to the target information in response to reception of the data; and
obtaining the feedback information by the transmitting node according to the target information.

17. The method for feedback control of sidelink communication as claimed in claim 16, wherein the target information comprises identification information of the transmitting node, and the receiving node transmits the feedback information according to the target information, and the step of obtaining the feedback information by the transmitting node according to the target information comprises:
using a control channel of the sidelink communication by the receiving node to transmit the identification information, and using the control channel of the sidelink communication to transmit the feedback information; and
interpreting the identification information in the control channel by the transmitting node, so as to obtain the feedback information corresponding to the identification information from the control channel.

18. The method for feedback control of sidelink communication as claimed in claim 16, wherein the target information comprises configuration information of a resource used for transmitting the feedback information that is configured by the transmitting node, and the receiving node transmits the feedback information according to the target information, and the step of obtaining the feedback information by the transmitting node according to the target information comprises:
using the resource of a control channel of the sidelink communication by the receiving node to transmit link information of the feedback information according to the configuration information recorded in the target information, and using the control channel of the sidelink communication to transmit the feedback information; and
reading the link information transmitted through the resource of the control channel by the transmitting node according to the configuration information, so as to obtain the feedback information corresponding to the link information from the control channel.

19. A transmitting node of a sidelink communication system, comprising:
a communication module, using sidelink communication to communicate with a receiving node of the sidelink communication system;
a storage device, storing a plurality of instructions; and
a processor, coupled to the communication module and the storage device, and configured to load and execute the instructions stored in the storage device to:
generate target information for transmitting feedback information with respect to data transmission between the transmitting node and the receiving node;
use the communication module to transmit data and the target information to the receiving node; and
use the communication module to receive the feedback information transmitted by the receiving node according to the target information in response to reception of the data.

20. The transmitting node of the sidelink communication system as claimed in claim 19, wherein the target information comprises identification information of the transmitting node, and the processor comprises:
using the communication module to interpret the identification information transmitted by the receiving node by using a control channel of the sidelink communication, so as to obtain the feedback information corresponding to the identification information from the control channel of the sidelink communication.

21. The transmitting node of the sidelink communication system as claimed in claim 19, wherein the target information comprises configuration information of a resource used for transmitting the feedback information that is configured by the transmitting node, and the processor comprises:
reading a link information transmitted by the receiving node through the resource of a control channel of the sidelink communication according to the configuration information, so as to obtain the feedback information transmitted by the receiving node through the control channel of the sidelink communication according to the link information.

22. A receiving node of a sidelink communication system, comprising:
a communication module, using sidelink communication to communicate with a transmitting node of the sidelink communication system;
a storage device, storing a plurality of instructions; and
a processor, coupled to the communication module and the storage device, and configured to load and execute the instructions stored in the storage device to:
use the communication module to receive data and target information transmitted by the transmitting node; wherein the target information is information for transmitting feedback information generated by the transmitting node with respect to data transmission between the transmitting node and the receiving node; and
use the communication module to transmit the feedback information according to the target information in response to reception of the data.

23. The receiving node of the sidelink communication system as claimed in claim 22, wherein the target information comprises identification information of the transmitting node, and the processor comprises:
using the communication module to transmit the identification information by using a control channel of the sidelink communication, and transmit the feedback information by using the control channel of the sidelink communication.

24. The receiving node of the sidelink communication system as claimed in claim 22, wherein the target information comprises configuration information of a resource used for transmitting the feedback information that is configured by the transmitting node, and the processor comprises:
transmitting link information of the feedback information by using the resource of a control channel of the sidelink communication according to the configuration information, and using the control channel of the sidelink communication to transmit the feedback information.
